# EUROPÄISCHE PATENTSCHRIFT

(11) **EP 3 065 945 B1**
(45) Veröffentlichungstag und Bekanntmachung des Hinweises auf die Patenterteilung: **31.07.2019**
(21) Anmeldenummer: 13788881.4
(22) Anmeldetag: 06.11.2013
(51) Int. Cl.: B30B 1/26, F16H 3/66

(54) **GETRIEBEEINHEIT UND ANORDNUNG FÜR EINE STANZPRESSE**
GEAR TRAIN UNIT AND ARRANGEMENT FOR A STAMPING PRESS
UNITÉ DE TRANSMISSION ET ENSEMBLE POUR UNE PRESSE À DÉCOUPER

(43) Veröffentlichungstag der Anmeldung: 14.09.2016
(73) Patentinhaber: Bruderer Ag, 9320 Frasnacht (CH)
(72) Erfinder: HAFNER, Josef Thomas, CH-9404 Rorschacherberg (CH); HARDMEIER, Pascal, CH-9320 Arbon (CH)
(74) Vertreter: Münch, Martin Walter
(86) Internationale Anmeldenummer: PCT/CH2013/000193
(87) Internationale Veröffentlichungsnummer: WO 2015/066822

(56) Entgegenhaltungen:
- EP-A1- 2 375 102
- WO-A1-91/19916
- DE-B- 1 153 583
- FR-A- 1 249 299
- JP-A- 2004 194 530
- US-A- 3 598 188

## Beschreibung

### TECHNISCHES GEBIET

Die vorliegende Erfindung betrifft eine Getriebeeinheit mit mehreren hintereinandergeschalteten Planetengetriebestufen sowie eine Anordnung umfassend eine solche Getriebeeinheit gemäss den Oberbegriffen der unabhängigen Patentansprüche.

### STAND DER TECHNIK

Getriebeeinheiten mit mehreren hintereinander geschalteten Planetengetriebestufen kommen dort zum Einsatz, wo bei niedriger Drehzahl extrem hohe Drehmomente benötigt werden.

Aus EP 2 375 102 A1 ist eine gattungsgemässe Getriebeeinheit mit drei Planetengetriebestufen zum Antrieb von Stanzpressen bekannt. Diese Getriebeeinheit weist jedoch den Nachteil auf, dass verschiedene Bauteile des Getriebes, wie z.B. das Antriebselement, aufgrund der Bauweise des Getriebes im Betrieb extremen mechanischen Beanspruchungen ausgesetzt sind, was die Verwendung sehr teurer Bauteile aus hochfesten Materialien erforderlich macht und zu einer unnötigen Limitation der mit dem Getriebe übertragbaren Leistungen führt.

Die gattungsgemäße Druckschrift FR 1 249 299 A offenbart ein mehrstufiges Planetengetriebe, bei welchem die Antriebswelle auf der linken Seite in das Getriebegehäuse eintritt und auf der rechten Seite die Abtriebswelle aus dem Getriebegehäuse austritt. Das Getriebegehäuse ist im Betrieb feststehend. Die Antriebswelle und die Abtriebswelle sind koaxial zueinander angeordnet. Die Antriebswelle ist an ihrem linken Ende in der im Betrieb ortsfesten Gehäusestruktur gelagert und an ihrem rechten Ende in der im Betrieb rotierenden Abtriebswelle gelagert. Auch bei dieser Getriebeeinheit sind verschiedene Bauteile des Getriebes aufgrund der Bauweise des Getriebes im Betrieb extremen mechanischen Beanspruchungen ausgesetzt, was auch hier die Verwendung sehr teurer Bauteile aus hochfesten Materialien erforderlich macht und zu einer unnötigen Limitation der mit dem Getriebe übertragbaren Leistungen führt.

### DARSTELLUNG DER ERFINDUNG

Es stellt sich deshalb die Aufgabe, eine Getriebeeinheit mit mehreren hintereinandergeschalteten Planetengetriebestufen zur Verfügung zu stellen, welche die zuvor erwähnten Nachteile des Standes der Technik nicht aufweist oder zumindest teilweise vermeidet.

Diese Aufgabe wird durch die Getriebeeinheit gemäss Patentanspruch 1 gelöst.

Demgemäss betrifft ein erster Aspekt der Erfindung eine Getriebeeinheit mit mehreren hintereinandergeschalteten Planetengetriebestufen, welche sich zum Verbinden eines Antriebsmotors, wie z.B. ein Elektromotor oder ein Hydraulikmotor, mit einem Stanzautomaten bzw. mit einer Stanzpresse eignet.

Die Planetengetriebestufen der Getriebeeinheit umfassen jeweils ein Hohlrad, ein Sonnenrad und mehrere an einem Planetenradträger gelagerte Planetenräder, wobei jeweils das Sonnenrad der in Kraftflussrichtung nachfolgenden Planetengetriebestufe vom Planetenradträger der vorangehenden Planetengetriebestufe gebildet ist oder drehsteif in Rotationsrichtung dieses Planetenradträgers mit diesem verbunden oder verbindbar ist.

Weiter umfasst die Getriebeeinheit ein Antriebselement, welches das Sonnenrad der in Kraftflussrichtung ersten Planetengetriebestufe bildet oder drehsteif in Rotationsrichtung dieses Sonnenrades mit diesem verbunden oder verbindbar ist, zum Antreiben des Sonnenrades.

Auch umfasst die Getriebeeinheit ein Abtriebselement, welches den Planetenradträger der letzten der hintereinander geschalteten Planetengetriebestufen bildet oder drehsteif in Rotationsrichtung dieses Planetenradträgers mit diesem verbunden oder verbindbar ist, zum Antreiben eines mit der Getriebeeinheit anzutreibenden Bauteils bzw. einer damit anzutreibenden Maschine.

Die Getriebeeinheit ist von einem trommelartigen Gehäuse umgeben, welches das Abtriebselement der Getriebeeinheit bildet. Dieses Gehäuse ist im Bereich der Enden seiner Trommelform mit anspruchsgemässen zweiten Lagern, welche bevorzugterweise als Wälzlager ausgebildet sind, rotierbar um eine im Zentrum seiner Trommelform verlaufende Achse gelagert.

Das Antriebselement ist im Bereich seiner beiden Enden mit anspruchsgemässen ersten Lagern, welche bevorzugterweise als Wälzlager ausgebildet sind, rotierbar um seine Längsachse gelagert, wobei zwischen diesen ersten Lagern ein Teil der Planetenradträger oder alle Planetenradträger der Planetengetriebestufen mit Lagern, welche bevorzugterweise als Wälzlager ausgebildet sind, auf dem Antriebselement gelagert sind.

Dabei ist das Antriebselement mit den ersten Lagern jeweils an einem im Betrieb ortsfesten Bauteil gelagert.

Durch die Erfindung wird es möglich eine Getriebeeinheit mit mehreren hintereinander geschalteten Planetengetriebestufen zur Verfügung zu stellen, welche kostengünstig, extrem robust und sehr kompakt aufgebaut ist, sehr hohe Leistungen übertragen kann und sich zudem auch gut in vorhandene Maschinenbauteile, z.B. in die Riemenscheibe des Riementriebs einer Presse, integrieren lässt. Auch wird auf diese Weise eine besonders stabile Lagerung des Antriebselements möglich, insbesondere dann, wenn die ortsfesten Bauteile, an denen das Antriebselement mit den ersten Lagern gelagert ist, Teil einer zusammenhängenden starren Tragstruktur der Getriebeeinheit sind, was bevorzugt ist.

Bevorzugterweise ist das Antriebselement dabei mit den ersten Lagern statisch bestimmt gelagert. Hierdurch kann erreicht werden, dass die Lagerbelastungen auch bei Verformungen, wie z.B. einer Durchbiegung, des Antriebselements jederzeit kontrollierbar bleiben.

Weiter ist es von Vorteil, dass das Antriebselement an einem Ende ausgebildet ist zur Ankopplung an einen Antriebsmotor und das ortsfeste Bauteil, an welchem das Antriebselement mit einem der anspruchsgemässen ersten Lager im Bereich dieses Endes gelagert ist, ausgebildet ist zum Tragen des Antriebsmotors. Hierdurch wird es möglich Motor/Getriebeeinheiten mit der erfindungsgemässen Getriebeeinheit zu bilden, welche extrem kompakt sind und eine hohe Verwindungssteifigkeit aufweisen.

In einer bevorzugten Ausführungsform der Getriebeeinheit überträgt der Abschnitt des Antriebselements, auf welchem ein Teil der Planetenradträger oder alle Planetenradträger gelagert sind, im bestimmungsgemässen Betrieb das Drehmoment zum Antrieb des Sonnenrades der ersten Planetengetriebestufe. Hierdurch wird es möglich, auf einfache Weise eine erfindungsgemässe Getriebeeinheit zur Verfügung zu stellen, bei welcher das Antriebselement und das Abtriebselement von der gleichen Getriebeseite her zugänglich sind.

Auch ist es bevorzugt, dass das Sonnenrad der ersten Planetengetriebestufe der Getriebeeinheit im Bereich eines Endes des Antriebselements angeordnet ist. Dabei ist es weiter bevorzugt, dass zumindest ein Teil des im Bereich dieses Endes des Antriebselements angeordneten anspruchsgemässen ersten Lagers innerhalb des Sonnenrades der ersten Planetengetriebestufe angeordnet ist. Durch diese Massnahmen wird eine kompakte Bauweise der Getriebeeinheit weiter begünstigt.

Weiter ist es dabei von Vorteil, dass dasjenige anspruchsgemässe erste Lager, welches im Bereich desjenigen Endes des Antriebselements angeordnet ist, in dessen Bereich das Sonnenrad der ersten Planetengetriebestufe angeordnet ist, als Festlager ausgebildet ist, bevorzugterweise mit einem Zylinderrollenlager. Diese Konstruktionsweisen begünstigen eine kostengünstige und robuste Lagerung des Antriebselements.

In noch einer weiteren bevorzugten Ausführungsform der Getriebeeinheit ist der Abschnitt des Antriebselements, auf welchem ein Teil oder alle Planetenradträger gelagert sind, bevorzugterweise zusammen mit dem Sonnenrad der ersten Planetengetriebestufe als einstückiges Bauteil ausgebildet. Eine derartige Ausgestaltung des Antriebselements ist besonders robust und hilft die Anzahl der Bauteile zu reduzieren.

Bevorzugterweise ist das trommelartige Gehäuse mit den anspruchsgemässen zweiten Lagern statisch bestimmt gelagert. Hierdurch sind die Lagerkräfte in allen Betriebszuständen kontrollierbar.

Weiter ist es bevorzugt, dass das trommelartige Gehäuse mit zumindest einem der anspruchsgemässen zweiten Lager, bevorzugterweise mit beiden anspruchsgemässen zweiten Lagern, direkt oder indirekt auf dem Antriebselement gelagert ist.

Alternativ oder ergänzend ist es auch bevorzugt, dass das trommelartige Gehäuse mit zumindest einem der anspruchsgemässen zweiten Lager, bevorzugterweise mit beiden zweiten Lagern, jeweils an einem im Betrieb ortsfesten Bauteil gelagert ist.

Je nach Konstruktionskonzept kann die eine oder die andere Variante oder eine Kombination aus beiden Varianten besonders vorteilhaft sein.

In der zuletzt genannten Variante ist es dabei bei Ausführungsformen der Getriebeeinheit, bei welchen die ortsfesten Bauteile, an denen das Antriebselement mit den anspruchsgemässen ersten Lagern gelagert ist, Teil einer zusammenhängenden starren Tragstruktur der Getriebeeinheit sind, bevorzugt, dass das oder die ortsfesten Bauteile, an denen das trommelartige Gehäuse mit den anspruchsgemässen zweiten Lagern gelagert ist, Teil derselben Tragstruktur sind, an der das Antriebselement mit den anspruchsgemässen ersten Lagern gelagert ist. Hierdurch wird ein einfacher und stabiler Aufbau der Tragstruktur begünstigt, insbesondere dann, wenn die Tragstruktur das trommelartige Gehäuse U-förmig umgreift, was bevorzugt ist.

Weiter ist es bei Ausführungsformen der Getriebeeinheit, bei denen diese von einem trommelartigen Gehäuse umgeben ist, welches das Abtriebselement der Getriebeeinheit bildet, bevorzugt, dass das trommelartige Gehäuse an seinem Aussenumfang eine Lauffläche für einen Keilriemen oder einen Flachriemen aufweist, oder eine Verzahnung für einen Zahnriemen, eine Kette oder ein Zahnrad, zum Ankoppeln an ein entsprechendes Antriebselement einer Arbeitsmaschine. D.h. das trommelartige Gehäuse, welches die Getriebeeinheit vollständig oder zumindest zum Teil umgibt, rotiert im Betrieb um die übrigen Getriebekomponenten herum und ist derartig ausgestaltet, dass seine Rotationsbewegung mittels geeigneter Übertragungsmittel, wie z.B. Flach-, Keil- oder Zahnriemen, Ketten oder Zahnrädern, auf eine Antriebwelle einer Arbeitsmaschine übertragen werden kann.

In noch einer weiteren bevorzugten Ausführungsform der Getriebeeinheit ist es bevorzugt, dass die Planetengetriebestufen in einem nach aussen hin abgedichteten Getriebeinnenraum angeordnet sind, welcher über nach aussen führende Zuführungsleitungen und Abführungsleitungen mit einem Schmierölkreislauf verbunden oder verbindbar ist. Auf diese Weise wird eine gezielte Schmierölversorgung aller kritischer Schmierstellen möglich und das Getriebe kann zudem auch durch den Schmierölkreislauf gekühlt werden, so dass es auch für die Übertragung sehr grosser Leistungen ausgelegt und verwendet werden kann.

Dabei ist es bei Ausführungsformen, bei denen das Antriebselement mit den anspruchsgemässen ersten Lagern jeweils an einem im Betrieb ortsfesten Bauteil gelagert ist, weiter bevorzugt, dass die Zuführungs- und Abführungsleitungen durch diese im Betrieb ortfesten Bauteile hindurchgeführt sind bzw. innerhalb dieser Bauteile verlaufen. Hierdurch kann eine sichere Zu- und Ableitung des Schmieröls ohne zusätzliche Bauteile erreicht werden.

In noch einer weiteren bevorzugten Ausführungsform ist die Getriebeeinheit schaltbar ausgebildet, und zwar derart, dass wahlweise ein erstes oder ein zweites Übersetzungsverhältnis einstellbar ist. Unter einer "schaltbaren" Getriebeeinheit wird hier eine Getriebeeinheit verstanden, deren Übersetzungsverhältnis ohne bauliche Veränderungen bzw. Eingriffe verändert werden kann, bevorzugterweise werkzeuglos durch Betätigung von Umschaltmitteln, wie z.B. ein Umschalthebel oder ein Betätigungsknopf. Mit derartigen Getriebeeinheiten ist es möglich, Arbeitsmaschinen, welche nur kurzzeitig aber dafür eine sehr grosse Prozesskraft benötigen und diese aus einem Schwungrad beziehen, auf kostengünstige Weise mit einem für den Normalbetrieb mit Schwungrad dimensionierten Motor derartig anzutreiben, dass diese wahlweise im Normalbetrieb oder in einem langsamen Betriebsmodus zum Einrichten und Austesten des Arbeitsprozesses betrieben werden können, wobei für den langsamen Betriebsmodus, in welchem das Schwungrad nicht wirksam oder nur geringfügig wirksam ist, vergleichbare Prozesskräfte zur Verfügung gestellt werden können wie im Normalbetrieb, in welchem das Schwungrad wirksam ist. So ist es mit derartigen Ausführungsformen der Getriebeeinheit beispielsweise möglich, Stanzpressen bzw. Stanzautomaten mit Kurbeltrieb und Schwungrad derartig anzutreiben, dass diese bei voller Stanzkraft sowohl im Normalbetrieb mit hohen Stanzfrequenzen betrieben werden können als auch in einem Langsambetrieb zum Einrichten und Austesten von Stanzwerkzeugen.

Dabei ist es bevorzugt, dass die Schaltbarkeit der Getriebeeinheit dadurch gegeben ist, dass die Hohlräder der Planetengetriebestufen wahlweise mit einem im Betrieb ortfesten Bauteil oder mit dem Antriebselement gekoppelt werden können, zum wahlweisen ortsfesten Festhalten oder Rotieren derselben gemeinsam mit dem Antriebselement. Auf diese Weise kann das Getriebe wahlweise gesperrt werden (Hohlräder mit Antriebselement gekoppelt), wodurch sich eine Übersetzung von 1:1 ergibt ohne das es zu Energieverlusten im Getriebe kommt, oder bestimmungsgemäss als Über- bzw. Untersetzungsgetriebe betrieben werden (Hohlräder mit ortsfesten Bauteilen gekoppelt) .

Ein zweiter Aspekt der Erfindung betrifft eine Anordnung mit einer Getriebeeinheit gemäss dem ersten Aspekt der Erfindung, welche zudem folgende Komponenten umfasst:
a) eine Stanzpresse bzw. einen Stanzautomaten mit einem Kurbel- oder Exzentertrieb zur Umwandlung der rotatorischen Bewegung einer Antriebswelle der Stanzpresse in die Stanzbewegung des Werkzeugs und mit einem mit der Antriebswelle koppelbaren oder gekoppelten Schwungrad; und
b) einen Antriebsmotor zum Antreiben der Antriebswelle der Stanzpresse.

Dabei ist das Antriebselement der Getriebeeinheit mit dem Antriebsmotor gekoppelt oder über eine bevorzugterweise schaltbare Kupplung koppelbar und das Abtriebselement der Getriebeeinheit ist mit der Antriebswelle der Stanzpresse bzw. des Stanzautomaten oder mit dem Schwungrad gekoppelt oder über eine bevorzugterweise schaltbare Kupplung koppelbar.

Die Bildung derartiger Anordnungen stellt eine bevorzugte Verwendung der erfindungsgemässen Getriebeeinheit dar.

In einer bevorzugten Ausführungsform umfasst die Anordnung eine Getriebeeinheit, welche schaltbar ausgebildet ist, derart, dass wahlweise ein erstes oder ein zweites Übersetzungsverhältnis einstellbar ist. Dabei sind der Antriebsmotor und die Übersetzungsverhältnisse der Getriebeeinheit derartig dimensioniert, dass die maximale Stanzkraft, die im Betrieb mit demjenigen Übersetzungsverhältnis der Getriebeeinheit bei welchem die langsamere Drehung der Antriebswelle resultiert (Schleichgangbetrieb) am Stössel der Stanzpresse erzeugbar ist, gleich gross oder grösser ist als die maximale Stanzkraft, die im Betrieb mit dem Übersetzungsverhältnis der Getriebeeinheit bei welchem die schnellere Drehung der Antriebswelle resultiert (Normalbetrieb) am Stössel der Stanzpresse erzeugbar ist. Der Antriebsmotor und die Übersetzungsverhältnisse sind also derartig gewählt, dass im Schleichgangbetrieb das durch die Getriebeuntersetzung vergrösserte Drehmoment des Antriebsmotors gleich gross oder grösser ist wie im Normalbetrieb die Summe aus dem Drehmoment des Antriebsmotors und dem vom Schwungrad für den Stanzprozess zur Verfügung gestellten Drehmoment. Hierdurch wird es möglich, die Stanzpresse bzw. den Stanzautomaten sowohl im Normalbetrieb mit hohen Stanzfrequenzen als auch im Schleichgangbetrieb zum Einrichten und Austesten von Stanzwerkzeugen mit voller Stanzkraft zu betreiben.

In einer weiteren bevorzugten Ausführungsform umfasst die Anordnung eine Getriebeeinheit, welche von einem trommelartigen Gehäuse umgeben ist, welches das Abtriebselement der Getriebeeinheit bildet. Dabei wird das Schwungrad vom Gehäuse der Getriebeeinheit gebildet, was den Vorteil ergibt, dass die Anlage besonders kompakt ausgeführt werden kann.

### KURZE BESCHREIBUNG DER ZEICHNUNGEN

Weitere bevorzugte Ausführungen der Erfindung ergeben sich aus den abhängigen Ansprüchen und aus der nun folgenden Beschreibung anhand der Figuren. Dabei zeigen:
Fig. 1 einen Längsschnitt durch eine schaltbare erfindungsgemässe Getriebeeinheit in einem ersten Schaltzustand;
Fig. 2 einen Längsschnitt durch die Getriebeeinheit aus Fig. 1 in einem zweiten Schaltzustand;
Fig. 3 einen Teil einer Rückansicht einer erfindungsgemässen Anordnung mit der Getriebeeinheit aus Fig. 1; und
Fig. 4 einen Teil einer Seitenansicht der Anordnung aus Fig. 3.

### WEGE ZUR AUSFÜHRUNG DER ERFINDUNG

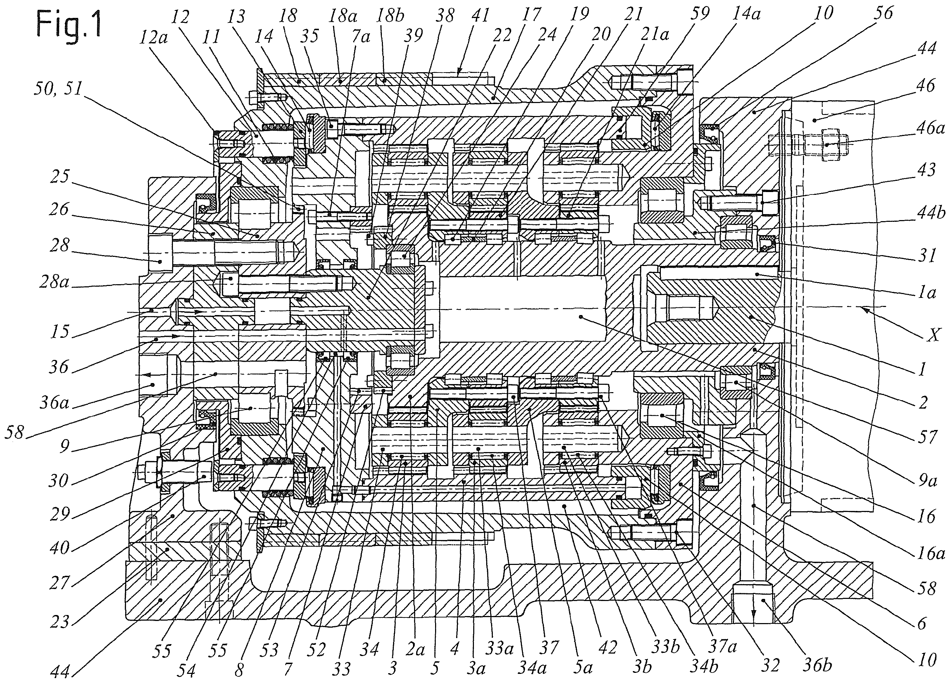

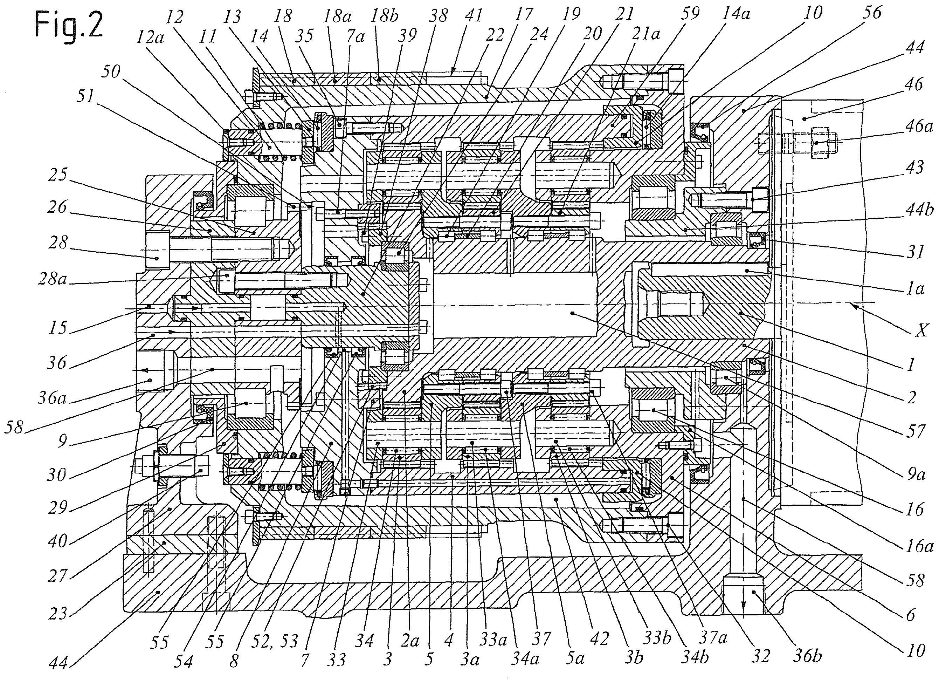

Die Figuren 1 und 2 zeigen eine schaltbare erfindungsgemässe Getriebeeinheit mit drei hintereinander geschalteten Planetengetriebestufen im vertikalen Längsschnitt, und zwar einmal in einem Schaltzustand, in dem das Getriebe wirksam ist (Fig. 1) und einmal in einem Zustand, in dem das Getriebe gesperrt ist (Fig. 2), d.h. in welchem das Übersetzungsverhältnis 1:1 ist.

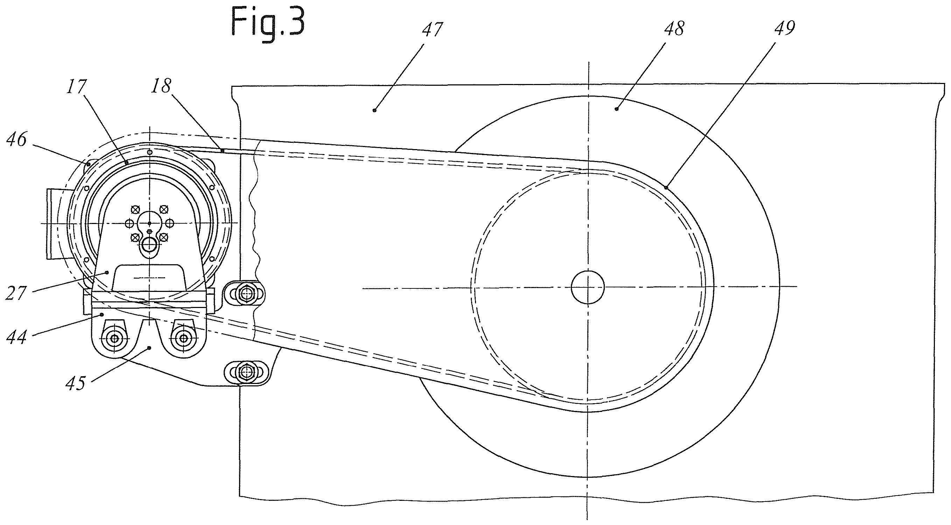

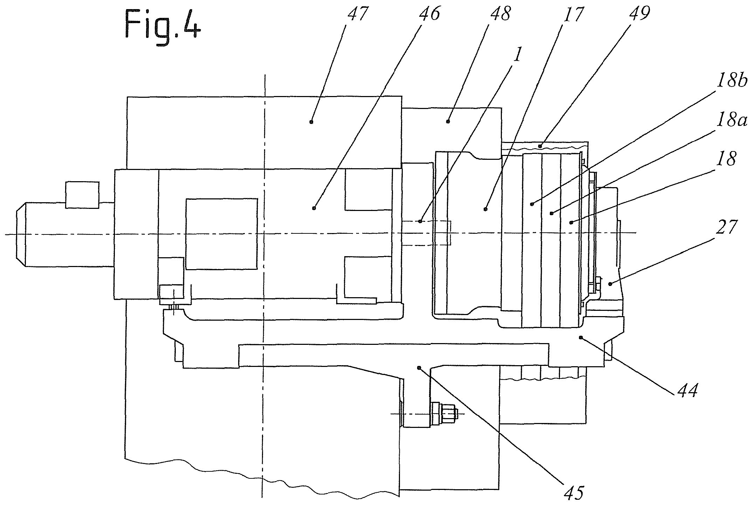

Die Darstellungen gemäss den Figuren 3 und 4 zeigen eine erfindungsgemässe Anordnung mit der Getriebeeinheit aus den Figuren 1 und 2 und einer damit angetriebenen Stanzpresse 47, einmal in einer teilweisen Rückansicht (Fig. 3) mit dem so genannten Hauptantrieb und einmal in einer teilweisen Seitenansicht (Fig. 4) mit der Motoraufhängung.

Wie zu erkennen ist, weist die Getriebeeinheit ein zentrales Antriebselement 2 auf, welches an einem seiner beiden Enden an eine horizontal liegende Welle 1 eines Elektromotors 46 (in Figuren 3 und 4 gezeigt) angekoppelt ist und an seinem anderen Ende das Sonnenrad 2a der ersten Planetengetriebestufe bildet. Im bestimmungsgemässen Betrieb treibt der Elektromotor 46 mittels Passfederverbindung 1a das Antriebselement 2 und über dieses das Sonnenrad 2a der ersten Planetengetriebestufe an. Das Antriebselement 2 ist im Bereich des von ihm an seinem linken Ende gebildeten Sonnenrades 2a auf einer im Betrieb ortsfesten Achsenanordnung 22, 25, 26 mit einem Rollenlager 24 axial und radial gelagert. Die ortsfeste Achsenanordnung 22, 25, 26 wird von einer zusammenhängenden starren Tragstruktur 23, 27, 44 getragen, welche das trommelförmige Gehäuse 6, 17 der Getriebeeinheit U-förmig umgreift. An seinem anderen Ende ist das Antriebselement 2 ausschliesslich in radialer Richtung mit einem Rollenlager 9a an einem Bauteil 44 der starren Tragstruktur 23, 27, 44 gelagert. Auf diese Weise ist das Antriebselement 2 an seinen Enden statisch bestimmt gelagert.

In der ersten Planetengetriebestufe der Getriebeeinheit sind vier erste Planetenräder 3 mit dem ersten Sonnenrad 2a und einer topfförmigen Hohlradanordnung 4, 8, welche die innen verzahnten Hohlräder für alle drei Getriebestufen bildet, im Eingriff. Die vier ersten Planetenräder 3 sind mittels Bolzen 33 und Nadelkränzen 34 drehbar und beidseitig in einem ersten Planetenradträger 5 abgestützt.

Dieser Planetenradträger 5 gibt das vergrösserte Drehmoment über Schrauben 37 an das Sonnenrad 21 der zweiten Planetengetriebestufe weiter. Der Planetenradträger 5 mit dem daran befestigten zweiten Sonnenrad 21 zum Antreiben der zweiten Planetengetriebestufe ist mittels zylindrischer Rollen 19 und einem Käfig 20 auf dem Antriebselement 2 gelagert.

In der zweiten Planetengetriebestufe sind fünf zweite Planetenräder 3a mit dem zweiten Sonnenrad 21 und einem zweiten innen verzahnten Hohlrad der topfförmigen Hohlradanordnung 4, 8 im Eingriff. Die fünf zweiten Planetenräder 3a stützen sich in dem zweiten Hohlrad ab und geben das Drehmoment mittels Bolzen 33a und Nadelkränzen 34a, beidseitig gestützt, an einen zweiten Planetenradträger 5a ab. Dieser gibt, wie schon der Planetenradträger 5 der ersten Planetengetriebestufe, das vergrösserte Drehmoment über Schrauben 37a an das Sonnenrad 21a der nächsten, nämlich der dritten Planetengetriebestufe weiter. Der zweite Planetenradträger 5a mit dem daran befestigten dritten Sonnenrad 21a zum Antreiben der dritten Planetengetriebestufe ist wiederum, in identischer Weise wie bei der ersten Planetengetriebestufe, mittels zylindrischer Rollen und einem Käfig auf dem Antriebselement 2 gelagert.

In der dritten Planetengetriebestufe sind acht dritte Planetenräder 3b eingebaut, die sich in einem dritten Hohlrad der topfförmigen Hohlradanordnung 4, 8 abstützen und ihr Moment über weitere Bolzen 33b und Nadelkränze 34b, nicht fliegend gestützt an einen dritten Planetenradträger 6 weiterleiten. Dieser Träger 6 ist Teil des trommelförmigen Gehäuses 6, 17 der Getriebeeinheit, welches als anspruchsgemässes Abtriebselement 6, 17 drei Zahnriemen 18, 18a, 18b antreibt.

Auf diese Weise kann das Drehmoment des Elektromotors 46 in dem in Fig. 1 dargestellten Zustand über mehrere Stufen auf ein sehr hohes Niveau gebracht werden. In diesem Fall wird die topfförmige Hohlradanordnung 4, 8, welche an ihrem rechten Ende mit einem Ringkolben 59 in einen mit Druckluft beaufschlagten pneumatischen Ringzylinder 10 eintritt, durch den Überdruck im Ringzylinder 10 nach links gedrückt, wo sie mit einer an ihrem linken Ende gebildeten Innenverzahnung 50 in eine an dem ortsfesten, nicht drehbaren Lagerzapfen 25 gebildete Aussenverzahnung 51 eingreift. Hierdurch ist die Hohlradanordnung 4, 8 in diesem Schaltzustand rotatorisch starr mit dem feststehenden Lagerzapfen 25 gekoppelt.

An dem linken Ende der Hohlradanordnung 4, 8 greift ein Druckring 13 an, der mit einer Anzahl Schrauben-Druckfedern 11 dafür sorgt, dass bei einem Drucklosschalten des Ringzylinders 10 die Hohlradanordnung 4, 8 in die Stellung gemäss Fig. 2 (Grundstellung) geschoben wird. Dabei wird die Innenverzahnung 50 der Hohlradanordnung 4, 8 ausser Eingriff mit der Aussenverzahnung 51 des Lagerzapfens 25 gebracht und anschliessend eine Innenverzahnung 53 eines an der topfförmigen Hohlradanordnung 4, 8 befestigten Zahnradringes 7 in Eingriff mit einer Aussenverzahnung 52 eines an der linken Stirnseite des Antriebselements 2 befestigten Zahnradrings 38 gebracht, so dass die Hohlradanordnung 4, 8 rotatorisch starr mit dem Antriebselement 2 gekoppelt ist. In dieser Getriebestellung ist das erste Sonnenrad 2a einerseits direkt über die in Eingriff miteinander stehenden Zahnradringe 38, 7 mit der Hohlradanordnung 4 verbunden und andererseits steht es in Verbindung mit den vier ersten Planetenrädern 3, die auch wieder mit dem ersten Hohlrad der Hohlradanordnung 4 im Eingriff stehen. Damit ist die gesamte Getriebeeinheit blockiert bzw. kurzgeschlossen und das die Riemenscheibe bildende Gehäuse 17 nimmt dieselbe Drehzahl an wie die Welle 1 des Elektromotors 46 (Übersetzungsverhältnis 1:1).

In der in Fig. 1 gezeigten Getriebestellung stehen die Hohlradanordnung 4, 8, und entsprechend die von dieser gebildeten Hohlräder der drei Getriebestufen still und das Planetengetriebe ist als Gesamtes aktiv in sehr langsamer Drehung. Das heisst, dass die Zahnriemen 18, 18a, 18b und das die Zahnriemenscheibe bildende Gehäuse 17 im konkreten Beispiel fast 19 Mal langsamer drehen als die Motorwelle 1 und gegenüber den still stehenden Hohlrädern eine Relativbewegung entsteht.

Aus diesem Grund ist ringzylinderseitig ein Gleitring 14a und federseitig ein Gleitring 14 angeordnet. Diese Gleitringe 14, 14a sorgen für verschleissfreies Gleiten auch unter dem Anpressdruck des Ringzylinders 10 und der Federn 11. Damit die einzelnen Federn 11 auf dem vorderen Ring 13 positioniert sind, sind die Federn 11 auf Führungsstiften 12 geführt.

Die Druckluft zur Beaufschlagung des Ringzylinders 10 zwecks Herbeiführung des in Fig. 1 dargestellten Schaltzustands wird von einen Speiseanschluss 15 in einem Bauteil 27 der feststehenden Tragstruktur 23, 27, 44 über mit diesem verbundene Zuführungsleitungen in den Bauteilen der ortsfesten Achsenanordnung 22, 25, 26 und über Zuführungsleitungen in den Bauteilen der topfförmigen Hohlradanordnung 4, 8 in den Ringzylinder 10 geführt. Dabei erfolgt die Übergabe von der im Betrieb feststehenden Achsenanordnung 22, 25, 26 auf die im Betriebszustand gemäss Fig. 2 im rotierende Hohlradanordnung 4, 8 über einen zwischen diesen gebildeten Ringspalt 54, welcher mit rotatorischen Dichtungen 55 abgedichtet ist.

Das trommelförmige Gehäuse 6, 17 ist an seinem linken Ende mit einem Zylinderrollenlager 9 auf der feststehenden Achsenanordnung 22, 25, 26 axial und radial gelagert, welches in axialer Richtung mit einem ringförmigen Deckel 29 in einer Aufnahmeöffnung im Gehäuse 17 gesichert ist. Eine zwischen dem Deckel 29 und dem die feststehende Achsenanordnung 22, 25, 26 tragenden Bauteil 27 der Tragstruktur 23, 27, 44 angeordnete Wellendichtung 30 schliesst den Innenraum 42 des trommelförmigen Gehäuses 6, 17 auf der linken Seite öldicht nach aussen hin ab.

An seinem anderen Ende ist das trommelförmige Gehäuse 6, 17 mit einem Zylinderrollenlager 16 ausschliesslich radial auf einem Lagerstutzen 44b gelagert, welcher fest mit einer Hauptkomponente 44 der feststehenden starren Tragstruktur 23, 27, 44 verschraubt ist und gleichzeitig dazu dient, das rechte Lager 9a des Antriebselements 2 axial in einer Aufnahmeöffnung in der Tragstruktur 44 zu halten. Das Lager 16 ist in einer Aufnahmeöffnung in dem den Planetenradträger 6 der letzten Getriebestufe bildenden Bauteil 6 des trommelförmigen Gehäuses 6, 17 gelagert, in welcher es axial mit einem Befestigungsring 16a gehalten wird.

Zwischen dem Befestigungsring 16a und der Hauptkomponente 44 der feststehenden Tragstruktur 23, 27, 44 sowie zwischen dem Antriebselement 2 und dieser Hauptkomponente 44 angeordnete Wellendichtungen 56, 31 schliessen den Innenraum 42 des trommelförmigen Gehäuses 6, 17 auf der rechten Seite öldicht nach aussen hin ab.

Das Schmieröl für die Getriebeeinheit wird von einen Speiseanschluss 36 in einem Bauteil 27 der feststehenden Tragstruktur 23, 27, 44 über mit diesem verbundene Zuführungsleitungen in den Bauteilen der ortsfesten Achsenanordnung 22, 25, 26 in eine zentrale Bohrung 57 im Antriebselement 2 eingespeist, von wo es über mehrere radiale Bohrungen im Antriebselement 2 den einzelnen Getriebestufen zugeführt wird. Der Schmierölrücklauf erfolgt über Abführungsleitungen 58 in den feststehenden Bauteilen 25, 26, 27 und 44 mit zugeordneten Rückführungsanschlüssen 36a, 36b.

Wie aus den Figuren 3 und 4 zu erkennen ist, ist der Elektromotor 46 mit der Getriebeeinheit auf einer Konsole 44 befestigt, welche mit Gummidämpfern auf einem Motorträger 45 befestigt ist, der wiederum am Pressenoberteil 47 befestigt ist. Der Motorträger 45 kann seitlich verschoben werden, um die Riemen 18, 18a, 18b vorzuspannen. Das Schwungrad der Stanzpresse ist unter einer Verschalung 48 angeordnet und ein Riemenschutz 49 verhindert den Zugriff auf die Riemen 18, 18a, 18b.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Getriebeeinheit zum Verbinden eines Antriebsmotors mit einem Stanzautomaten bzw. mit einer Stanzpresse, mit mehreren hintereinander geschalteten Planetengetriebestufen, welche jeweils ein Hohlrad, ein Sonnenrad (2a, 21, 21a) und mehrere an einem Planetenradträger (5, 5a, 6) gelagerte Planetenräder (3, 3a, 3b) umfassen, wobei jeweils das Sonnenrad (2a, 21, 21a) der nachfolgenden Planetengetriebestufe vom Planetenradträger (5, 5a) der vorhergehenden Planetengetriebestufe gebildet ist oder drehsteif in Rotationsrichtung dieses Planetenradträgers (5, 5a) mit diesem verbunden oder verbindbar ist,
mit einem Antriebselement (2), welches das Sonnenrad (2a) der ersten Planetengetriebestufe bildet oder drehsteif in Rotationsrichtung dieses Sonnenrades (2a) mit diesem verbunden oder verbindbar ist,
und mit einem Abtriebselement (6, 17), welches den Planetenradträger (6) der letzten der hintereinander geschalteten Planetengetriebestufen bildet oder drehsteif in Rotationsrichtung dieses Planetenradträgers (6) mit diesem verbunden oder verbindbar ist,
wobei die Getriebeeinheit von einem trommelartigen Gehäuse (6, 17) umgeben ist, welches das Abtriebselement (6, 17) der Getriebeeinheit bildet und welches mit im Bereich der Enden seiner Trommelform angeordneten zweiten Lagern (9, 16), insbesondere Wälzlagern (9, 16), rotierbar um eine im Zentrum seiner Trommelform verlaufenden Achse (X) gelagert ist,
wobei das Antriebselement (2) mit im Bereich seiner Enden angeordneten ersten Lagern (9a, 24), insbesondere Wälzlagern (9a, 24), rotierbar um seine Längsachse gelagert ist und zumindest ein Teil der Planetenradträger (5a, 5b, 6) der Planetengetriebestufen mit Lagern (19, 20), insbesondere mit Wälzlagern (19, 20), im Bereich zwischen den ersten Lagern (9a, 24) auf dem Antriebselement (2) gelagert sind,
**dadurch gekennzeichnet, dass** das Antriebselement (2) mit den ersten Lagern (9a, 24) jeweils an einem im Betrieb ortsfesten Bauteil (22, 44, 44b) gelagert ist.

2. Getriebeeinheit nach Anspruch 1, wobei die ortsfesten Bauteile (22, 44, 44b), an denen das Antriebselement (2) mit den ersten Lagern (9a, 24) gelagert ist, Teil einer zusammenhängenden starren Tragstruktur (22, 23, 25, 26, 27, 44, 44b) der Getriebeeinheit sind.

3. Getriebeeinheit nach einem der vorangehenden Ansprüche, wobei das Antriebselement (2) mit den ersten Lagern (9a, 24) statisch bestimmt gelagert ist.

4. Getriebeeinheit nach einem der vorangehenden Ansprüche, wobei das Antriebselement (2) an einem Ende ausgebildet ist zur Ankopplung an einen Antriebsmotor (46) und wobei das ortsfeste Bauteil (44), an welchem das Antriebselement (2) mit einem der ersten Lager (9a) im Bereich dieses Endes gelagert ist, ausgebildet ist zum Tragen des Antriebsmotors (46).

5. Getriebeeinheit nach einem der vorangehenden Ansprüche, wobei der Abschnitt des Antriebselements (2), auf welchem die Planetenradträger (5, 5a) gelagert sind, im bestimmungsgemässen Betrieb das Drehmoment zum Antrieb des Sonnenrades (2a) der ersten Planetengetriebestufe überträgt.

6. Getriebeeinheit nach einem der vorangehenden Ansprüche, wobei das Sonnenrad (2a) der ersten Planetengetriebestufe im Bereich eines Endes des Antriebselements (2) angeordnet ist.

7. Getriebeeinheit nach Anspruch 6, wobei zumindest ein Teil des im Bereich dieses Endes des Antriebselements (2) angeordneten ersten Lagers (24) innerhalb des Sonnenrades (2a) der ersten Planetengetriebestufe angeordnet ist.

8. Getriebeeinheit nach einem der Ansprüche 6 bis 7, wobei dasjenige erste Lager (24), welches im Bereich desjenigen Endes des Antriebselements (2) angeordnet ist, in dessen Bereich das Sonnenrad (2a) der ersten Planetengetriebestufe angeordnet ist, als Festlager ausgebildet ist, insbesondere mit einem Zylinderrollenlager (24) .

9. Getriebeeinheit nach einem der vorangehenden Ansprüche, wobei der Abschnitt des Antriebselements (2), auf welchem die Planetenradträger (5, 5a) gelagert sind, insbesondere zusammen mit dem Sonnenrad (2a) der ersten Planetengetriebestufe als einstückiges Bauteil ausgebildet ist.

10. Getriebeeinheit nach einem der vorangehenden Ansprüche, wobei das trommelartige Gehäuse (6, 17) mit den zweiten Lagern (9, 16) statisch bestimmt gelagert ist.

11. Getriebeeinheit nach einem der vorangehenden Ansprüche, wobei das trommelartige Gehäuse (6, 17) mit zumindest einem der zweiten Lager (9, 16), insbesondere mit beiden zweiten Lagern (9, 16), direkt oder indirekt auf dem Antriebselement (2) gelagert ist.

12. Getriebeeinheit nach einem der vorangehenden Ansprüche, wobei das trommelartige Gehäuse (6, 17) mit zumindest einem der zweiten Lager (9, 16), insbesondere mit beiden zweiten Lagern (9, 16), jeweils an einem im Betrieb ortfesten Bauteil (25, 44b) gelagert ist.

13. Getriebeeinheit nach Anspruch 2 und nach Anspruch 12, wobei das oder die ortsfesten Bauteile (25, 44b), an denen das trommelartige Gehäuse (6, 17) mit den zweiten Lagern (9, 16) gelagert ist, Teil der Tragstruktur (22, 23, 25, 26, 27, 44, 44b) sind, an der das Antriebselement (2) mit den ersten Lagern (9a, 24) gelagert ist.

14. Getriebeeinheit nach Anspruch 13, wobei die Tragstruktur (22, 23, 25, 26, 27, 44, 44b) das trommelartige Gehäuse (6, 17) U-förmig umgreift.

15. Getriebeeinheit nach einem der vorangehenden Ansprüche, wobei das trommelartige Gehäuse (6, 17) an seinem Aussenumfang eine Lauffläche für einen Keilriemen oder einen Flachriemen aufweist, oder eine Verzahnung (41) für einen Zahnriemen (18, 18a, 18b), eine Kette oder ein Zahnrad, zum Ankoppeln an ein entsprechendes Antriebselement einer Arbeitsmaschine.

16. Getriebeeinheit nach einem der vorangehenden Ansprüche, wobei die Planetengetriebestufen in einem nach aussen hin abgedichteten Getriebeinnenraum (42) angeordnet sind, welcher über nach aussen führende Zuführungsleitungen und Abführungsleitungen mit einem Schmierölkreislauf verbindbar ist.

17. Getriebeeinheit nach Anspruch 16, wobei die Zuführungs- und Abführungsleitungen durch die im Betrieb ortfesten Bauteile (22, 25, 26, 27; 44) geführt sind, an denen das Antriebselement (2) mit den ersten Lagern (9a, 24) gelagert ist.

18. Getriebeeinheit nach einem der vorangehenden Ansprüche, wobei die Getriebeeinheit schaltbar ist, derart, dass wahlweise ein erstes oder ein zweites Übersetzungsverhältnis einstellbar ist.

19. Getriebeeinheit nach Anspruch 18, wobei die Schaltbarkeit dadurch gegeben ist, dass die Hohlräder der Planetengetriebestufen wahlweise mit einem im Betrieb ortfesten Bauteil (25) oder mit dem Antriebselement (2) gekoppelt werden können, zum wahlweisen Festhalten oder Rotieren derselben gemeinsam mit dem Antriebselement (2).

20. Anordnung umfassend eine Getriebeeinheit nach einem der vorangehenden Ansprüche, und weiter umfassend
a) eine Stanzpresse mit einem Kurbel- oder Exzentertrieb zur Umwandlung der rotatorischen Bewegung einer Antriebswelle der Stanzpresse in die Stanzbewegung des Werkzeugs und mit einem mit der Antriebswelle koppelbaren oder gekoppelten Schwungrad; und
b) einen Antriebsmotor (46) zum Antreiben der Antriebswelle der Stanzpresse;
wobei das Antriebselement (2) der Getriebeeinheit mit dem Antriebsmotor (46) gekoppelt oder über eine Kupplung koppelbar ist und das Abtriebselement (17) der Getriebeeinheit mit der Antriebswelle der Stanzpresse oder dem Schwungrad gekoppelt oder über eine Kupplung koppelbar ist.

21. Anordnung nach Anspruch 20 mit einer Getriebeeinheit nach Anspruch 18, wobei der Antriebsmotor (46) und die Übersetzungsverhältnisse der Getriebeeinheit derartig dimensioniert sind, dass die maximale Stanzkraft, die im Betrieb mit demjenigen Übersetzungsverhältnis der Getriebeeinheit, bei welchem die langsamere Drehung der Antriebswelle resultiert, am Stössel der Stanzpresse erzeugbar ist, gleich gross oder grösser ist wie die maximale Stanzkraft, die im Betrieb mit dem Übersetzungsverhältnis der Getriebeeinheit, bei welchem die schnellere Drehung der Antriebswelle resultiert, am Stössel der Stanzpresse erzeugbar ist.

22. Anordnung nach einem der Ansprüche 20 bis 21, wobei das Schwungrad vom trommelartigen Gehäuse (6, 17) der Getriebeeinheit gebildet ist.

## Claims

1. Gear train unit for coupling a drive motor with an automatic punching press or with a punching press, respectively, with a plurality of planetary gear train stages connected one after the other, which each comprise a ring gear, a sun gear (2a, 21, 21a) and a plurality of planet gears (3, 3a, 3b) supported on a planet carrier (5, 5a, 6), wherein the sun gear (2a, 21, 21a) of each following planetary gear train stage is formed by the planet carrier (5, 5a) of the preceding planetary gear train stage or is connected or connectable with said planet carrier (5, 5a) in a torsionally rigid manner in rotational direction of the latter,
with a driving element (2) which forms the sun gear (2a) of the first planetary gear train stage or which is connected or connectable with said sun gear (2a) in a torsionally rigid manner in rotational direction of the latter,
and with an output element (6, 17) which forms the planet carrier (6) of the last of the planetary gear train stages connected one after the other, or which is connected or connectable with said planet carrier (6) in a torsionally rigid manner in rotational direction of the latter,
wherein the gear train unit is surrounded by a drum-type housing (6, 17) which forms the output element (6, 17) of the gear train unit and which is supported by second bearings (9, 16), particularly roller bearings (9, 16), arranged in the area of the ends of its drum shape, in a rotatable manner about an axis (X) extending in the center of its drum shape,
wherein the driving element (2) is supported by means of first bearings (9a, 24), particularly roller bearings (9a, 24), arranged in the region of its ends, in a rotatable manner about its longitudinal axis and wherein at least a part of the planet carriers (5a, 5b, 6) of the planetary gear train stages is supported on the driving element (2) in the region between the first bearings (9a, 24) by means of bearings (19, 20), particularly by means of roller bearings (19, 20),
**characterized in that** the driving element (2) is supported with the first bearings (9a, 24) in each case at a component (22, 44, 44b) which is stationary during operation.

2. Gear train unit according to claim 1,
wherein the fixed components (22, 44, 44b), to which the driving element (2) is supported with the first bearings (9a, 24), are part of a contiguous rigid supporting structure (22, 23, 25, 26, 27, 44, 44b) of the gear train unit.

3. Gear train unit according to one of the preceding claims, wherein the driving element (2) is supported with the first bearings (9a, 24) in a statically determinate manner.

4. Gear train unit according to one of the preceding claims, wherein the driving element (2) is formed at one end for coupling to a driving motor (46) and wherein the stationary component (44), at which the driving element (2) is supported with one of the first bearings (9a) in the area of this end, is formed for carrying the driving motor (46).

5. Gear train unit according to one of the preceding claims, wherein the section of the driving element (2), on which the planet carriers (5, 5a) are supported, transmits the torque for driving the sun gear (2a) of the first planetary gear stage during operation as intended.

6. Gear train unit according to one of the preceding claims, wherein the sun gear (2a) of the first planetary gear train stage is arranged in the area of an end of the driving element (2).

7. Gear train unit according to claim 6, wherein at least a part of the first bearing (24) arranged in the area of this end of the driving element (2) is arranged inside the sun gear (2a) of the first planetary gear train stage.

8. Gear train unit according to one of the claims 6 to 7, wherein the first bearing (24) which is arranged in the area of the end of the driving element (2), in the area of which the first sun gear (2a) of the first planetary gear train stage is arranged, is formed as fixed bearing, particularly with a cylindrical roller bearing (24).

9. Gear train unit according to one of the preceding claims, wherein the section of the driving element (2), on which the planet carriers (5, 5a) are arranged, particularly together with the sun gear (2a) of the first planetary gear train stage, is formed as a one- piece component.

10. Gear train unit according to one of the preceding claims, wherein the drum-type housing (6, 17) with the second bearings (9, 16) is supported in a statically determinate way.

11. Gear train unit according to one of the preceding claims, wherein the drum-type housing (6, 17) is supported directly or indirectly on the driving element (2) with at least one of the second bearings (9, 16), particularly with both second bearings (9, 16).

12. Gear train unit according to one of the preceding claims, wherein the drum-type housing (6, 17) is supported in each case at a component (25, 44b) which is fixed during operation with at least one of the second bearings (9, 16), particularly with both second bearings (9, 16).

13. Gear train unit according to claim 2 and according to claim 12, wherein the fixed component or components (25, 44b), at which the drum-type housing (6, 17) is supported with the second bearings (9, 16), are part of the supporting structure (22, 23, 25, 26, 27, 44, 44b) at which the driving element (2) is supported with the first bearings (9a, 24).

14. Gear train unit according to claim 13, wherein the supporting structure (22, 23, 25, 26, 27, 44, 44b) encompasses the drum-type housing (6, 17) in a U-shape.

15. Gear train unit according to one of the preceding claims, wherein the drum-type housing (6, 17) has at its outer circumference a running surface for a V-belt or a flat belt, or a toothing (41) for a toothed belt (18, 18a, 18b), a chain or a gear wheel, for coupling to a corresponding driving element of a work machine.

16. Gear train unit according to one of the preceding claims, wherein the planetary gear train stages are arranged inside an interior space of the gear sealed towards the outside, which is connectable with a lubricating oil circuit via supply lines and discharge lines leading to the outside.

17. Gear train unit according to claim 16, wherein the supply and discharge lines are guided through the components (22, 25, 26, 27; 44) which are fixed during operation, at which the driving element (2) is supported with the first bearings (9a, 24).

18. Gear train unit according to one of the preceding claims, wherein the gear train unit is switchable in such a way that a first or a second transmission ratio is selectively settable.

19. Gear train unit according to claim 18, wherein the ability to switch is given in such a way that the ring gears of the planetary gear train stages can selectively be coupled with a component (25) which is fixed during operation or with the driving element (2), for selectively retaining or rotating the latter together with the driving element (2).

20. Arrangement comprising a gear train unit according to one of the preceding claims, and further comprising
a) a punch press with a crank drive or an eccentric drive for transforming the rotational motion of a drive shaft of the punch press into the punching motion of the tool and with a flywheel connectable or connected with the drive shaft; and
b) a drive motor (46) for driving the drive shaft of the punch press;
wherein the driving element (2) of the gear train unit is connected or connectable via a coupling with the drive motor (46) and the output element (17) of the gear train unit is connected or is connectable via a coupling with the drive shaft of the punch press or the flywheel.

21. Arrangement according to claim 20 with a gear train unit according to claim 18, wherein the drive motor (46) and the transmission ratios of the gear train unit are dimensioned in such a way that the maximum punching force which can be generated at the plunger of the punch press in operation with the transmission ratio of the gear train unit at which the slower rotation of the drive shaft results, is equal to or greater than the maximum punching force which can be generated at the plunger of the punch press in operation with the transmission ratio of the gear train unit at which the faster rotation of the drive shaft results.

22. Arrangement according to one of the claims 20 to 21, wherein the flywheel is formed by the drum-type housing (6, 17) of the gear train unit.

## Revendications

1. Unité de transmission pour coupler un moteur d'entraînement avec un automate de poinçonnage ou avec une presse de poinçonnage, respectivement, avec une pluralité d'étages d'engrenages planétaires reliés les uns après les autres, qui comprennent chacun une couronne, un planétaire (2a, 21, 21a) et une pluralité de roues satellites (3, 3a, 3b) supportées sur un support de planète (5, 5a, 6), le planétaire (2a, 21, 21, 21a) de l'étage d'engrenages planétaires suivant étant formé par le support de planète (5, 5a) de l'étage d'engrenages planétaires précédent ou est relié ou peut être relié audit support de planète (5, 5a) d'une manière rigide en torsion dans la direction de rotation de celui-ci,
avec un élément d'entraînement (2) qui forme le planétaire (2a) du premier étage d'engrenages planétaires ou qui est relié ou peut être relié audit planétaire (2a) d'une manière rigide en torsion dans le sens de rotation de celui-ci,
et avec un élément de sortie (6, 17) qui forme le support de planète (6) du dernier des étages d'engrenages planétaires reliés l'un après l'autre, ou qui est relié ou peut être relié audit support de planète (6) d'une manière rigide en torsion dans le sens rotatif de celui-ci,
l'unité de transmission étant entourée d'une carcasse de type tambour (6, 17) qui forme l'élément de sortie (6, 17) de l'unité de transmission et qui est supporté par des seconds paliers (9, 16), en particulier des paliers à rouleaux (9, 16), disposés dans la zone des extrémités de sa forme tambour, de manière rotative autour d'un axe (X) s'étendant au centre de sa forme tambour,
l'élément d'entraînement (2) étant supporté au moyen de premiers paliers (9a, 24), en particulier des roulements à rouleaux (9a, 24), disposés dans la zone de ses extrémités, de manière rotative autour de son axe longitudinal, et au moins une partie des supports de planète (5a, 5b, 6) des étages d'engrenages planétaires étant soutenue sur l'élément d'entraînement (2) dans la zone entre les premiers paliers (9a, 24) par des paliers (19, 20), particulièrement au moyen des roulements à rouleaux (19, 20),
**caractérisée en ce que** l'élément d'entraînement (2) est supporté par les premiers paliers (9a, 24) sur un composant (22, 44, 44b) qui est stationnaire en fonctionnement.

2. Unité de transmission selon la revendication 1,
les composants fixes (22, 44, 44b), auxquels l'élément d'entraînement (2) est supporté par les premiers paliers (9a, 24), faisant partie d'une structure de support rigide contiguë (22, 23, 25, 26, 27, 44, 44, 44b) de l'unité de transmission.

3. Unité de transmission selon l'une des revendications précédentes, l'élément d'entraînement (2) étant supporté par les premiers paliers (9a, 24) d'une manière statique déterminée.

4. Unité de transmission selon l'une des revendications précédentes, l'élément d'entraînement (2) étant formé à une extrémité pour l'accouplement à un moteur d'entraînement (46) et le composant fixe (44), auquel l'élément d'entraînement (2) est supporté par un des premiers paliers (9a) dans la zone de cette extrémité, étant formé pour porter le moteur d'entraînement (46).

5. Unité de transmission selon l'une des revendications précédentes, la partie de l'élément d'entraînement (2), sur laquelle s'appuient les supports de planète (5, 5a), transmettant le couple pour entraîner le planétaire (2a) du premier étage d'engrenages planétaires en fonctionnement comme prévu.

6. Unité de transmission selon l'une des revendications précédentes, le planétaire (2a) du premier étage d'engrenages planétaires étant disposé dans la zone d'une extrémité de l'élément d'entraînement (2).

7. Unité de transmission selon la revendication 6, au moins une partie du premier palier (24) disposé dans la zone de cette extrémité de l'élément d'entraînement (2) étant disposée à l'intérieur du planétaire (2a) du premier étage d'engrenages planétaires.

8. Unité de transmission selon l'une des revendications 6 à 7, le premier palier (24) qui est disposé dans la zone de l'extrémité de l'élément d'entraînement (2), dans la zone duquel est disposé le premier planétaire (2a) du premier étage d'engrenages planétaires, étant réalisé comme palier fixe, particulièrement avec un palier à rouleaux cylindriques (24).

9. Unité de transmission selon l'une des revendications précédentes, la partie de l'élément d'entraînement (2) sur laquelle sont disposés les supports de planète (5, 5a), en particulier avec le planétaire (2a) du premier étage d'engrenages planétaires, étant réalisée d'une seule pièce.

10. Unité de transmission selon l'une des revendications précédentes, la carcasse (6, 17) en forme de tambour avec les seconds paliers (9, 16) étant supportée d'une manière statiquement déterminée.

11. Unité de transmission selon l'une des revendications précédentes, la carcasse (6, 17) en forme de tambour est supporté directement ou indirectement sur l'élément d'entraînement (2) avec au moins l'un des seconds paliers (9, 16), en particulier avec les deux seconds paliers (9, 16).

12. Unité de transmission selon l'une des revendications précédentes, la carcasse (6, 17) du type à tambour (6, 17) étant supportée à chaque fois sur un composant (25, 44b) qui est fixé pendant le fonctionnement avec au moins un des seconds paliers (9, 16), en particulier avec les deux seconds paliers (9, 16).

13. Unité de transmission selon la revendication 2 et selon la revendication 12, le ou les composants fixes (25, 44b), sur lesquels la carcasse (6, 17) en forme de tambour est supporté par les seconds paliers (9, 16), faisant partie de la structure porteuse (22, 23, 25, 26, 27, 27, 44, 44b) dans laquelle l'élément d'entraînement (2) est soutenu par les premiers paliers (9a, 24).

14. Unité de transmission selon la revendication 13, la structure porteuse (22, 23, 25, 26, 27, 44, 44, 44b) entourant en U la carcasse en forme de tambour (6, 17).

15. Unité de transmission selon l'une des revendications précédentes, la carcasse (6, 17) en forme de tambour présentant sur sa périphérie extérieure une surface de roulement pour une courroie trapézoïdale ou une courroie plate, ou une denture (41) pour une courroie dentée (18, 18a, 18b), une chaîne ou une roue dentée, pour accouplement à un correspondant élément de transmission d'une machine de travail.

16. Unité de transmission selon l'une des revendications précédentes, les étages d'engrenages planétaires étant disposés à l'intérieur d'un espace intérieur de l'engrenage étanche vers l'extérieur, qui peut être relié à un circuit d'huile lubrifiante par des conduites d'alimentation et de décharge menant vers l'extérieur.

17. Unité de transmission selon la revendication 16, les conduites d'alimentation et de décharge étant guidées à travers les composants (22, 25, 26, 27; 44) fixes pendant le fonctionnement, sur lesquels l'élément d'entraînement (2) est soutenu par les premiers paliers (9a, 24).

18. Unité de transmission selon l'une des revendications précédentes, l'unité de transmission étant commutable de telle sorte qu'un premier ou un second rapport de transmission peut être réglé de manière sélective.

19. Unité de transmission selon la revendication 18, la possibilité de commutation étant donnée de telle sorte que les couronnes des étages d'engrenages planétaires peuvent être couplées sélectivement avec un composant (25) qui est fixé pendant le fonctionnement ou avec l'élément d'entraînement (2), pour retenir ou faire tourner celui-ci avec l'élément d'entraînement (2) sélectivement.

20. Agencement comprenant une unité de transmission selon l'une des revendications précédentes, et comprenant en outre
a) une poinçonneuse avec un entraînement à manivelle ou un entraînement excentrique pour transformer le mouvement de rotation d'un arbre d'entraînement de la poinçonneuse en mouvement de poinçonnage de l'outil et avec un volant d'inertie pouvant être relié ou relié à l'arbre d'entraînement; et
b) un moteur d'entraînement (46) pour entraîner l'arbre d'entraînement de la poinçonneuse;
l'élément d'entraînement (2) de l'unité de transmission étant relié ou pouvant être relié par un accouplement au moteur d'entraînement (46) et l'élément de sortie (17) de l'unité de transmission étant relié ou pouvant être relié par un accouplement à l'arbre d'entraînement de la poinçonneuse ou au volant.

21. Agencement selon la revendication 20 avec une unité de transmission selon la revendication 18, le moteur d'entraînement (46) et les rapports de transmission de l'unité de transmission sont dimensionnés de telle sorte que la force de poinçonnage maximale qui peut être générée sur le piston de la poinçonneuse en fonctionnement avec le rapport de transmission de l'unité de transmission auquel résulte la rotation plus lente de l'arbre d'entraînement, est égale ou supérieure à la force de poinçonnage maximale qui peut être générée au piston de la poinçonneuse en fonctionnement avec le rapport de passage de l'unité de transmission auquel résulte la rotation rapide de l'arbre d'entraînement.

22. Agencement selon l'une des revendications 20 à 21, le volant d'inertie étant formé par la carcasse en forme de tambour (6, 17) de l'unité de transmission.
